(19) **Europäisches Patentamt**

**European Patent Office**

**Office européen des brevets**

(11) Publication number: **0 354 810 B1**

(12) **EUROPEAN PATENT SPECIFICATION**

(45) Date of publication of patent specification: **08.02.95**

(51) Int. Cl.[6]: **A23F 5/36**, A23F 5/28

(21) Application number: **89308197.6**

(22) Date of filing: **11.08.89**

(54) **Coffee glass and products.**

(30) Priority: **12.08.88 US 231809**
**12.08.88 US 231811**
**12.08.88 US 231807**
**12.08.88 US 231810**
**22.09.88 US 247982**

(43) Date of publication of application:
**14.02.90 Bulletin 90/07**

(45) Publication of the grant of the patent:
**08.02.95 Bulletin 95/06**

(84) Designated Contracting States:
**AT BE CH DE ES FR GB IT LI LU NL SE**

(56) References cited:
**US-A- 2 457 036**
**US-A- 2 906 630**
**US-A- 2 929 717**
**US-A- 3 625 704**
**US-A- 4 154 864**

(73) Proprietor: **KRAFT GENERAL FOODS, INC.**
**250 North Street**
**White Plains**
**New York 10625 (US)**

(72) Inventor: **Rankowitz, Marshall**
**48 Sandpiper Drive**

**Englishtown**
**New Jersey 07726 (US)**
Inventor: **Epps, Jackie**
**7 Nathalie Court**
**Peekshill**
**New York 10566 (US)**
Inventor: **Macfeiggan, Pamela Jane Summers**
**136 Midvale Avenue**
**Millington**
**New Jersey 07946 (US)**
Inventor: **Scarella, Robert**
**14 Clover Road**
**Valhalla**
**New York 10595 (US)**
Inventor: **Fave, Nicholas Della**
**127 Arthus Street**
**Ridgefield Park**
**New Jersey 07660 (US)**
Inventor: **Musto, Joseph**
**3179 Rochambeau Avenue**
**Bronx**
**New York 10467 (US)**
Inventor: **Arora, Vijay**
**9 Stone Hollow Road**
**Montvale**
**New Jersey 07645 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

EP 0 354 810 B1

Inventor: **Jones, Gary**
**Rockwinkler Landstrasse 58**
**D-2800 Bremen (DE)**
Inventor: **Kovtun, John**
**380 Jensen Avenue**
**Rahway**
**New Jersey 07065 (US)**
Inventor: **Brandlein, Lawrence**
**14 Thomas Drive**
**Englishtown**
**New Jersey 07726 (US)**
Inventor: **Vitti, Rudolf**
**54 Spring Drive**
**Dumont**
**New Jersey 07628 (US)**
Inventor: **Gabbard, Ronald**
**1811 Green Hollow Drive**
**Iselin**
**New Jersey 08830 (US)**

(74) Representative: **Eyles, Christopher Thomas**
**W.P. THOMPSON & CO.**
**Celcon House**
**289-293 High Holborn**
**London WC1V 7HU (GB)**

## Description

This invention relates to a process for producing a gasified coffee glass. Processes according to the involve formation of a gasified melt in a confined headspace. On cooling the melt forms a hard coffee glass which trap the aromas. The invention also relates to a coffee glass product obtainable by the process of the invention. The invention provides an improved, economical process for aromatizing and preparing shelf-stable coffee products which have not suffered from heat damage and yet may be quickly reconstituted in hot water to yield coffee of excellent flavor and aroma. The process is particularly suitable for producing aromatized stable coffee glass.

The present invention is concerned with the manufacture of instant coffee. The manufacture of instant coffee involves extracting roasted and ground coffee beans with water under conditions of high temperature and pressure to form extracts which are dried with or without aromas added by known means such as spray-drying, freeze-drying or the like.

In an early effort to avoid drying of such coffee extracts by Eskew, U.S. Patent 2,929,717, issued March 22, 1960, a fifty-fifty mixture of concentrated coffee extract and an invert sugar solution were concentrated in a thin film evaporator to form a product having four percent or less water which was pumped out of the evaporator and formed on chilling rolls into small flakes which were easily broken into a coarse product before packaging. In this process, the product temperatures exiting the evaporator ranged from 220°F (104.4°C) to 290°F (143.3°C) and the products produced had moisture contents of about 1 to 4% and were hydroscopic by reason of the addition of large amounts of the invert sugars. This type of processing was also applied by Turkot et al., U.S. Patent 2,906,630, issued September 29, 1959. While the process of Eskew and Turkot et al. produced coffee products without the need to spray-dry, a filler was employed which is not suitable in today's market. Furthermore, special packaging would be required to reduce the chance of moisture contamination which would be disastrous because of the hygroscopisity of the coffee product produced.

In another attempt, Earle Jr., et. al., U.S. 3,419,399 patented December 31, 1968, prepared aromatized soluble coffee doughs having a moisture content of 9.5 to 12.5% at a temperature below 140°F (60°C) and then dryed the dough to 1-4%. This material was very sticky and difficult to process.

Another attempt to produce dehydrated vegetable extracts is disclosed by Risler, et. al., U.S. Patent 4,154,864, issued May 15, 1979. Risler, et. al. formed a paste or powder which is extruded into a subatmospheric pressure chamber to puff the coffee product. For example, freeze-dried instant coffee powder, having a moisture content of 2.5%, is extruded into a chamber at 80 mb and cut to form grains about the size of a pea which dissolve in cold water. When compared to these grains extruded into atmospheric pressure in Example 5 of that patent, the products with cellular internal structure are far more soluble.

In U.S. Patent No. 3,625,704 to Andre, et al, issued December 7, 1971, dense flakes of instant coffee are prepared and aromatized from roll-milled instant coffee.

In the field of flavor fixation, particularly of essential oils, a number of patents have issued teaching a carbohydrate glass to protect the flavor. For example, United States Patent 3,041,180 issued to Swisher discloses a method for fixing flavorants in an extruded carbohydrate substrate. The product of the Swisher invention is obtained by emulsifying an essentially water-insoluble essential oil with a molten mixture of glycerol and corn syrup solids as the continuous phase, extruding the emulsified mass in the form of filaments into a cold fluid, preferably an organic solvent for the essential oil which is a nonsolvent for the corn syrup solids, followed by impact breaking of the solidified filaments into small particles of usable form and then holding the particles in the solvent, preferably for an extended period, to remove essential oil from the surfaces of the particles together with a substantial portion of the residual moisture contained on and in the particles. This methodology is conducted in excess of 130°C.

United States Patent 3,704,137 to Beck discloses a method for preparing an essential oil composition. His method involves the cooking of an aqueous solution of sucrose and hydrolyzed cereal solids until it is at a boiling point of about 122°C, and the water level reaches a desired minimum. At this point, the heating is stopped, the mixture is agitated, and an emulsifier is added. The emulsifier is necessary in order for a homogeneous solution to form. While the solution is cooling, the essential oil and an antioxidant are added, and are intimately mixed. The final mix is forced through an extruder under air pressure. At this point, about 0.5% by weight of the final composition of an anticaking agent is added to prevent the particles from sticking.

United States Patent 4,004,039 to Shoaf et al. discloses a process for the encapsulation of "Aspartame" in any number of matrix forming materials. The product is formed by creating a hot melt which, upon cooling, is capable of forming a relatively amorphous matrix within which the sweetener is discretely

3

dispersed.

EPO published patent application 0158460 to Pickup et al., teaches a method for fixing volatile flavorants in a food-approved substrate, and, more particularly, to a low-temperature methodology for fixing volatile flavorants in an extruded "carbohydrate-glass" substrate. Volatiles or essential oils are dry blended with 10-30% low molecular weight carbohydrate, food acid or the like and at least 70% of a high molecular weight polymeric carbohydrate which contains at least 95% material above 1000 molecular weight. The dry mixture is extruded to form on cooling a hard glass-like substance.

While these methods have enabled workers in the art to produce useful food products, they have not provided a means for producing aromatized coffee glass which is prepared from 100% coffee derived material.

## SUMMARY OF THE INVENTION

The present invention provides a method of forming a gasified coffee glass comprising:

(a) forming a mixture of from 88% to 97% total coffee derived solids and 3% to 12% water;

(b) adjusting the mixture temperature to 60°C to 130°C to form a melt;

(c) injecting gas into the melt under pressure in a confined area to form a gasified melt;

(d) forcing the melt under pressure through an orifice to shape the gasified melt;

(e) rapidly cooling the gasified shaped melt leaving the orifice to form a gasified homogeneous coffee glass; and

(f) recovering the homogeneous gasified glass.

Preferred but optional features of the invention are defined in claims 2 to 37.

The invention also provides transparent, dry, flakes of coffee glass obtainable by a method according to the invention, the flakes being shiny on both sides and dark brown in colour, having a thickness of 1 to 15 mils (25.4 to 381 $\mu$m), a screen size of -8 to +30 U.S. standard mesh (-2.38 mm to +595 $\mu$m), a bulk density of 0.35 to 0.55 g cm$^{-3}$ and a color of 15 to 22°L and optionally a moisture content below 6% water and a soluble coffee product containing 60 to 95% dry coffee having a bulk density of 0.15 to 0.35 g cm$^{-3}$ and 5 to 40% of a glass as just mentioned.

It has thus been discovered that a stable instant coffee product can be prepared from a process which involves obtaining a mixture containing 3% to 12% (preferably above 4% to 9% water and 88% to 97% (preferably 91% to below 96%) total coffee derived solids, preferably by either concentrating coffee extract or by reconstituting instant coffee products either spray-dried, freeze-dried or otherwise with water. If desired, these two techniques may be combined. After obtaining the moist coffee, it is subjected to heat and shear to effect a molten liquid phase between 60°C to 130°C (preferably 70°C to 110°C) within a confined area or headspace. One or more coffee-derived or synthetic coffee aromas may be added to the coffee melt and the mixture preferably well blended to form a homogeneous mixture. The mixture is shaped and rapidly cooled to affect a transition from liquid coffee melt to a coffee glass, preferably with a retention of at least 50%, more preferably 70% and most preferably 80% or more of volatiles. Finally, the cooled product can be ground, preferably at low temperature, or otherwise processed into useful coffee products. We have found volatile retention by this invention to be better than freeze drying or spray drying coffee, particularly aromatized coffee.

The process of the invention avoids a dehydration or drying step during the fixation process, and the volatile loss associated with such a drying step. It also allows fixation of the aroma under pressure in a confined area which further prevents aroma loss.

In a preferred embodiment, the process for preparing an improved soluble coffee product would be conducted in an extruder and comprises: (a) moisturizing one hundred percent coffee derived powder or concentrating one hundred percent coffee derived extract to 88% to 97% or preferably 91% to about 96% by weight solids; (b) subjecting the solids to sufficient heat and shear to give a molten liquid coffee at 60°C to 130°C, preferably 70 to 110°C, most preferably 80° to 100°C under a confined headspace; (c) adding natural or synthetic coffee flavors and aromas to the coffee melt under confined headspace; (d) blending the coffee melt and the aroma stream to form a homogenous mixture; (e) shaping and rapid cooling of the homogenous mixture to affect a phase transition from coffee melt to coffee glass with at least 50% retention of volatiles preferably 70%; most preferably 80% retention of volatiles; (f) grinding, preferably cryogenically, the solidified mixture; and (g) drying the mixture to below 6% if drying is necessary.

The coffee glass encapsulates and retains coffee aromas and flavors. As the melt leaves the extruder, it is important to rapidly cool the product to solidify the matrix and retain the aromas and flavors.

The advantages of coffee glass processing includes (1) optimizing volatile retention for instant coffees, (2) formation of small chips of concentrated flavor which can be incorporated in coffee products, (3) formation of new shapes for soluble coffee, (4) providing increase coffee processing capacity by using concentration and extruding equipment, rather than spray or freeze drying to give final coffee products, (5) eliminating or significantly minimizing dehydration required for stability, (6) incorporation of coffee mannan and coffee cellulosic hydrolysates in the coffee glass without producing unusable hygroscopic products. It is important in seeking these advantages to reduce the potential for thermal degradation by limiting temperature and residence time.

DESCRIPTION OF THE INVENTION

In accordance with the present invention, a coffee glass product is prepared by forming a mixture of 88% to 97% coffee solids and 3% to 12% water at a temperature of from 60°C to 130°C. The mixture may then be aromatized using a concentrated coffee aroma, synthetic aroma or mixtures thereof. Preferably, pure coffee derived aroma is employed. The mixture is then preferably thoroughly mixed in a restricted or confined area under pressure and rapidly cooled to affect a phase transition and form a coffee glass.

The coffee mixture can be prepared from coffee extract obtained by normal percolation by subjecting the extract to falling film evaporators or other suitable devices, to obtain a solids content of at least 88%. The solids content, however, cannot exceed 97% since it is important to form a mixture which is a liquid at a temperature between 60°C to 130°C and will form a coffee glass upon cooling. The coffee mixture can also be obtained by mixing dried coffee solids, spray-dried, freeze-dried or otherwise, with sufficient water to produce a moisture content between 3% and 12%.

Obviously, both means of obtaining a coffee concentrate may be combined as by mixing concentrated coffee extract with dry soluble coffee to obtain the desired moisture content. Whatever means is employed, a uniform homogeneous coffee melt should be obtained between 60°C and 130°C. In a preferred embodiment a melt of about 91 to 96% solids is prepared at 70°C to 110°C.

This invention, in addition to working well with conventionally extracted roasted and ground coffee extracts, can also be applied to those extracts which are obtained from coffee by heat, acid, enzymatic or base hydrolysis. For example, a portion of the coffee solids, may be derived from hydrolyzed mannan which forms oligomers having a DP anywhere from 1 to 8 such as disclosed in U.S. Patent 4,544,567. These materials are generally obtained by high pressure, short time, high temperature treatment of residual coffee grounds which cause the mannan to be hydrolyzed to lower molecular weight oligomers, having DP's up to 8. The coffee can also contain cellulosic sugars derived from the cellulosic components of coffee which are produced by the enzymatic, acid or base hydrolysis of such coffee solids.

In accordance with a preferred aspect of the present invention, the orifice in step (d) is provided by a sheeting die having an opening of 2 to 20 mils., (51 to 510 $\mu$m), pressures of up to 2,500 pounds per square inch (17.4 MPa) preferably being employed. Preferably the method includes stretching the mixture of melt immediately as it is discharged from the restricted area and also subjecting the melt to uniform pulling using a travelling belt or other device which reduces the thickness of the sheet, preferably to 1 to 15 mils. (25.4 to 381 $\mu$m) (a 2 to 10 times reduction in thickness of the expanding melt leaving the preferred die) and allows rapid cooling to form a thin, transparent hard glass. Finally, the cooled material is preferably suitably treated by reducing the glass in size. Drying is preferable to produce a coffee glass of stable moisture content.

Suprisingly, we have found that stretching the melt actually improves aroma retention in the resulting supercooled coffee glass, perhaps by speeding up the surface cooling of the melt to glass form and preventing evaporative loss of the aroma.

The coffee mixture can be prepared from coffee extract obtained by normal percolation by subjecting the extract to falling film evaporators or other suitable devices, to obtain a solids content of at least 88% and, more preferably, 91% or more. The solids content, should be at least 88%, preferably 91%, and, most preferably, less than 96% to form a mixture which has certain properties to allow proper extrusion of the coffee melt. The coffee mixture can also be obtained by mixing dried coffee solids, spray-dried, freeze-dried or otherwise, with sufficient water, aroma, extract or concentrated extract to produce a moisture content preferably between above 4% and 12%, more preferably about 4% and 9% water and 91 to less than 96% coffee solids.

With sufficient mixing and heat there is produced a uniform, homogenous material which is similar physically to that obtained by concentration of coffee extract to the desired solids content. In either case, the coffee solids should have the following characteristics to ensure the production of a coffee melt which will form a suitable glass. The mixture should preferably have a glass transition temperature of between 30°C and 80°C, preferably 40°C and 65°C.

By glass transition temperature, we mean the liquification upon heating through this region of a material in a glassy state to one in the fluid state. The transformation is indicated by a change in a second order thermodynamic quantity such as the expansion coefficient or heat capacity. The change is due to the onset of extensive molecular motion which occurs in the transformation from a glass to a liquid. The change can be characterized by a glass transition temperature or Tg. Measurements of the dimensional stability of a material over a range of temperatures can be used to derive the Tg. A pentration thermogram as generated by the Thermomechanical Analyzer (TMA; manufactured by Perkin-Elmer) is used as the source of dimensional data. As described in the Applications Section of the Instruction Manual (Model TMS-2, publication #993-9246), Tg is identified as the temperature at which the first evidence of displacement of the penetration thermogram occurs from the pre-transition baseline.

In accordance with another process according to the present invention, a coffee glass product is prepared by forming a mixture of 88% to 97%, preferably from 91% solids to below 96% solids and 3 to 12%, preferably above 4% to 9%, water at a temperature of from 60 to 130°C. The mixture is then injected with gas, preferably inert gas, in a confined area, aromatized if desired, and forced through a restricted area or die at pressures of up to 2500 pounds per square inch (17.4 MPa). The mixture is then rapidly cooled by liquid nitrogen, cold air or by pulling the gasified melt by means of a traveling belt or roller to reduce the thickness of the shape produced and to allow rapid cooling whereupon the cooled material or glass is suitably reduced in size and dried to a stable moisture content. This glass may then be combined with other coffees.

The coffee mixture can be prepared from coffee extract obtained by normal percolation by subjecting the extract to falling film evaporators or other suitable devices, to obtain a solids content of at least 88% and preferably 91% or more. The solids content is adjusted to form a mixture which will form a super-cooled gasified coffee glass upon cooling. The coffee mixture can also be obtained by mixing dried coffee solids, spray-dried, freeze-dried or otherwise, with sufficient water to produce a moisture content of 3% to 12%, preferably between above 4% and 9%.

With sufficient mixing there is produced a homogeneous material which is similar to that obtained by concentration of coffee extract. The coffee mixture can also be prepared by adding a small amount of dry soluble coffee to concentrated coffee extract. In all cases the coffee solids obtained should preferably have a glass transition temperature of between 30°C to about 80°C.

This instant process, in addition to working well with conventionally extracted roasted and ground coffee extracts, can also be applied to those extracts which are obtained from coffee by heat, enzymatic, acid or base hydrolysis. For example, a portion of the coffee solids, may be derived from hydrolyzed mannan which forms oligomers having a DP anywhere from 1 to 8. These materials are generally obtained by high pressure, short time, high temperature treatment of wetted residual coffee grounds which cause the mannan to be hydrolyzed to relatively high molecular weight oligomers, having DP's up to 8. The coffee can also contain cellulosic sugars derived from the cellulosic components of coffee which are produced by the acid or base hydrolysis of such coffee solids. In any case, the addition of mannan oligomers and cellulosic derived coffee sugars does not produce such a reduction in glass transition temperature, which would result in a failure to produce a coffee glass of acceptable hygroscopicity.

In a preferred embodiment, the process for preparing an improved soluble coffee product would comprise: (a) evaporating a preconcentrated 100% coffee extract having a solids content of 45% or greater to a solid content of 88% to 97% or preferably 91% to 96% by weight solids while subjecting the concentrated solids to sufficient heat and shear to give a molten liquid coffee at 60°C to 130°C, preferably 70 to 110°C, most preferably 80°C to 100°C under a confined headspace; (b) aromatizing and/or gasifying the viscoelastic fluid under confined headspace and blending to form a homogeneous mixture; (c) shaping and rapid cooling of the homogeneous mixture to affect a phase transition from viscoelastic fluid to coffee glass with at least 50% retention of volatiles preferably 75%, most preferably 80% retention of volatiles; and (d) grinding and sizing the solidified mixture.

The advantages of total evaporative preparation of coffee glass is an opportunity for (1) good volatile retention by avoiding prolonged dehydration steps, (2) prevention of coagulation and other physical changes which occur during conventional drying of coffee extracts, (3) formation of small chips of concentrated flavor which can be incorporated in coffee products, (4) formation of new shapes for soluble coffee, (5) providing increase coffee processing capacity by using concentration and extruding equipment, rather than spray or freeze-drying to give final coffee products, (6) incorporation of coffee mannan and coffee cellulosic hydrolysates in the coffee glass without producing hygroscopic products. It is important in seeking these advantages to reduce the potential for thermal degradation by limiting temperature and residence time.

In accordance with the preferred embodiment, a coffee glass product is prepared by evaporating coffee from a dilute extract to a highly viscous, dense viscoelastic fluid of 88% to 97% coffee solids and 3% to 12% water at a temperature of from 60°C to 130°C. The mixture is then optionally aromatized using a concentrated coffee aroma, synthetic aroma or mixtures thereof. Preferably, pure coffee aroma derived from the extract is employed. The mixture is gasified. The mixture is then throughly mixed in a restricted or confined area under pressure and rapidly cooled to affect a phase transition and form a coffee glass.

The coffee mixture can be prepared from coffee extract obtained by normal percolation after stripping aroma from the extract to recover aroma, the extract is subjected to falling film evaporators or other suitable concentration devices to obtain a solids content of at least 45%. The concentrated coffee is next subjected to the Filmtruder Polymer machine where the solids content of the extract is raised to 88% to 96% solids. Aroma is then added back to the extract which is then formed into useful products.

In accordance with a preferred feature of the present invention, coffee extract is concentrated to 45% solids or greater using conventional coffee evaporating and stripping techniques. For example, coffee extract may be concentrated in a vacuum triple effect evaporator to above 45% solids. A portion of the evaporate may be retained for aroma recovery. Alternatively the coffee extract is stripped in a column to remove volatile components prior to evaporation. The concentrated extract is next passed through a Filmtruder Polymer machine wherein a rapidly turning rotor lays a thin film of extract on the evaporator wall tangentially to the wall and affect a downward spiral flow by having paddles directing the extract in a downward pattern while others spread the extract tangentially and perpendicular to the axis of the rotor. Films of 1/8 inch (3.2 mm) extract ±1/64 inch (400 $\mu$m) work very well.

While the rotors of such machines may turn from 50 to 700 rpm, we prefer to employ 350 to 550 rpm for coffee extract. Steam of 35 to 45 psig (343 to 412 kPa) is applied to the jacket of the evaporator while a vacuum of from 7 to 14 inches of mercury (24 to 47 kPa) is usually applied on the extract side of the evaporator. Pressure above atmospheric may be applied to maintain a extract temperature from 60°C to 130°C. The extract is pushed down the evaporator barrel by the wiping effect of the rotor blades and exits the evaporative section at a concentration of 88% to 97% solids, preferably 91% to about 96% solids. A high pressure gear pump is used to remove the extract, which can have a viscosity of up to about 1,000,000 centipoise (1000 Ps) from the evaporator.

If desired, a holding tank or area is added to collect the concentrated extract adjacent to the evaporative section and prior to the pump. This area allows the use of the gear pump to deliver a variable flow of highly concentrated fluid to mixers for the subsequent aromatizing and/or gasifying and forming parts of the process. Alternatively, a gear pump can be used to force the concentrated extract to the feed tank and another gear pump used to feed later stages of the process. Preferably, the holding tank is equipped with means for mixing and maintaining temperature.

From the holding tank the concentrated viscoelastic fluid may be forced under pressure through a series of static mixers where coffee aroma and/or inert gas is introduced into the fluid.

After introducing aroma and/or gas the fluid is thoroughly mixed and passed to a shaping device where films, ropes or other shapes are formed. The fluid at 60° to 130°C, preferably 70° to 110°C, most preferably 80° to 100°C, is formed and rapidly cooled to a brittle glass. Cooling is accomplished by immersing or spraying with cold gas or in a cold tunnel or for film by stretching the film exiting a sheeting die.

The rapid cooling sets the outer layer of the formed fluid and prevents any appreciable loss of coffee aroma.

Once brittle the glass is reduced in size by grinding or other means and sized by screening to the desired finished product. When the product is above 6% water content a drying step is preferably used to reduce the moisture to 2.5% to 5% $H_2O$. This stabilizes the coffee preventing clumping and stabilizes the product against aromatized flavor loss.

This invention, in addition to working well with conventionally extracted roasted and ground coffee extracts, can also be applied to those extracts which are obtained from coffee by heat, acid, enzymatic or base hydrolysis. For example, a portion of the coffee solids, may be derived from hydrolyzed mannan which forms oligomers having a DP anywhere from 1 to 8. These materials are generally obtained by high pressure, short time, high temperature treatment of residual coffee grounds which cause the mannan to be hydrolyzed to lower molecular weight oligomers, having DP's up to 8. The coffee can also contain cellulosic sugars derived from the cellulosic components of coffee which are produced by the enzymatic, acid or base hydrolysis of such coffee solids.

The dry soluble coffee or concentrated extract used in this invention preferably has a composition dry basis percentage as follows:

|  | % | More Preferred % |
|---|---|---|
| Total Carbohydrates | 15-50 | 30-40 |
| Reducing Sugars included in total carbohydrates | 5-20 | 5-15 |
| Protein | 5-15 | 6-10 |
| Alkyloids | 0-6 | 2-6 |
| Chlorogenic Acid | 2-35 | 5-15 |
| Other Acids | 2-12 | 4-8 |
| Ash | 2-16 | 5-9 |

We have found that while the composition of roasted coffee has a considerable amount of caramelized sugar the resulting glass is not so hygroscopic that it cannot be stored at high temperatures because of the moisture limitation used in preparing the glass melt.

Once the coffee mixture is prepared, it is gasified by injecting gas into the mixture. The gas is preferably uniformly blended from various gases, such as nitrogen, air, carbon dioxide or other gases and mixtures thereof, which will cause a reduction in the density of the coffee mixture and allow flexibility and control of the final coffee product density. Such gasification also helps in producing improved solubility and has an effect on lightening the color of the product, both useful when designing new forms of coffee products using the glass as a component.

In addition, aromas can be added, either with the gasification step, or separately, such as by injecting the aromas into the mixture and then homogenously blending the mixture. It is desirable in adding aroma to reduce the temperature effect on aroma by maintaining the aromatized coffee melt at high temperature in a confined space and then cool the mass in no more than three minutes time. Thermal degradation and loss of the aroma is prevented by cooling the melt immediately after it is forced through an orifice or series of orifices when shaping. On exiting the orifices, the coffee melt quickly solidifies and cools to a hard glass. Alternatively, the mixture may be rapidly cooled within the extruder by known means. It is important to cool and resolidify the melt to form the glass. In either case, we preferred to cool the aromatized coffee within 180 seconds, preferably within 120 seconds and, most preferably, within one minute by using a liquid nitrogen bath or other rapid cooling techniques.

The aromas can be stabilized in coffee oil, coffee extract or in other art recognized ways. The aromas are collected in art recognized ways.

The coffee glass is particularly valuable for protecting and stabilizing natural and synthetic flavors and aromas which may be added to the coffee. Apparently, the high solids content of the molten liquid phase under pressure allows rapid formation of a homogeneous aromatized mixture which can be immediately cooled to affect a transition from coffee melt to coffee glass with less than 50% loss, more preferably 30%, and preferably less than 20% loss of volatile aromas. Optionally, inert gas may be incorporated in the aromatized melt to protect the aromas against oxidation, to adjust density, and improve solubility of the final cooled melt or coffee glass. Once cool, the coffee glass can then be broken into the desired size.

Suitable flavors and aromas include aromas collected from roasted and ground coffee called grinder gas, aroma from coffee extract sometimes called vent gas and aromas from coffee oil, steam aromas, vacuum aromas and any other known forms of coffee aroma and flavor. In addition, other known forms of coffee such as colloidal coffee, can be dispersed and encapsulated in the melt.

The following examples are intended to illustrate the present invention without limiting it.

EXAMPLE I

Soluble spray-dried and agglomerated instant Maxwell House® brand coffee having a 0.25 g/cm density at a moisture content of 4.9% was hand fed into a K-Tron volumetric feeder located on barrel 6 of Werner-Pfleiderer twin screw extruder Model No. 1982 ZSK 57 mm 50/2. Water was pumped into barrel 8 at 3.4 lbs/hr (0.43 gs$^{-1}$). Liquid coffee aroma made in a manner taught in U.S. Patent No. 4,574,089 at a density of 0.85 g/cm was metered into the extruder at 0.55 lbs/hr (0.24 gs$^{-1}$). The aroma delivery system was pressurized to avoid aroma loss and the aroma temperature was held to a maximum of 2°C.

The coffee was processed through 5 barrels of the 11 barrel extruder. The 5 temperature zones were controlled to achieve the following conditions:

8

EP 0 354 810 B1

| Barrel No. | Actual Temp. (°C) |
|---|---|
| 6 (feed) | 31 |
| 7 | 40 |
| 8 | 86 |
| 9 | 60 |
| 10 | 36 |
| 11 | 46 |

The extruder operated at a rate of 85 lb/hr (10.7 gs$^{-1}$) and 64% torque with the screws turning at 60 rpm.

The feed streams were homogenized and melted by mechanical heat into a coffee matrix. The product exited the extruder at 88°C and 8% moisture through a rope die having two 3/4 diameter opening. The extrudate was quick cooled by immersion in liquid nitrogen and formed a brittle coffee glass. Once brittle, the coffee glass was ground.

Aroma retention of 93% was obtained by this process as measured by a gas chromatograph using a purge and trap procedure. Samples of feed powder spiked with the coffee aroma at the stoichiometrically correct level and aromatized extruded product were compared. The procedure involved preparing a solution of the sample coffee and water. The volatiles were driven from the coffee solution onto a sorbant tube by the use of heat and a helium gas sweep. An Envirochem Unacon concentrator was used to desorb the volatiles and transfer them onto a fused silica column in a gas chromatograph equipped with a FID (carbon) detector.

The aroma retentions obtained compared favorably with those typically found with spray-drying (55%), agglomeration (75% per pass) or freeze drying (65-75%).

The configuration of the twin 1290 mm self-cleaning screws (shown just following) was assembled from elements available through Werner Pfleiderer. It included right handed kneading blocks (K) which acted as up and down stream seals reducing the amount of added aroma vaporizing out of the extruder.

| Pitch of Flights: | 60 | 2X80 | 80 | 4X60 | K | 60 | 2X40 | K | 2X40 | K | 4X40 |
|---|---|---|---|---|---|---|---|---|---|---|---|
| Length (mm): | 30 | 80 | 40 | 60 | 40 | 60 | 40 | 20 | 40 | 20 | 40 |

## EXAMPLE II

Soluble coffee, pre-moistured to 8% moisture in a ribbon blender, was fed at 3.3 #/hr to a Brabender single screw 25/1 L/D ratio extruder with a 0.75" (19 mm) diameter 2/1 compression ratio screw. Liquid aroma coffee made in a manner taught by U.S. Patent 4,574,089 was pumped into the extruder at 0.05 #/hr. The screw was operated at 50 rpm and exerted 4500-5000 Nm torque. The 3 heating zones kept the molten coffee at 75, 80 and 80°C respectively. The temperature controlled die adaptor section was kept at 85° and coffee melts emerged at 88°C after an average retention time of 1.75-2 minutes. The coffee melts cooled quickly forming a brittle glass.

The extrudate was ground in a Homoloid mill using 00 to 20 mesh screens, blended with spray-dried coffee powder at 10% glass to 90% spray-dried material and allowed to equilibrate.

A four-month accelerated storage study confirmed that the product stored well, aroma remaining trapped in the coffee matrix for at least 10 weeks at ambient and 9 weeks at 35°C as measured organoleptically.

If desired, other products can be prepared with different aroma and coffee derived material.

## EXAMPLE III

A lower density extruded form different from ropes and sheets was prepared by using a gas injected vertical tubing die. In this case, a C.W. Brabender single screw 15/1 L/D ratio (0.75" (19 mm) diameter) extruder was equipped with a 1/1 compression ratio screw. Soluble coffee (9.5% moisture) was fed to the extruder. The three heated zones were set at 75°C, 80°C and 85°C and the Brabender vertical tubing die (11/32" (8.7 mm) OD 9/32" (7.1 mm) ID) was heated to 85°C.

The soluble coffee passed through the extruder at rates of 2.0-34 lbs/hr (0.25-4.28 gs$^{-1}$) exiting the extruder at 80-86°C. The screw was operated at speeds of 22, 33 and 40 rpm and 300-400 psi (2.07-2.76 MPa) pressure was built up at the die. The melt was extruded onto a teflon coated belt operated at 40-60

9

rpm. The extrudate formed tubes with a dark outer surface and a glassy dark inner surface. These tubes could be inflated by pinching the end forming a thin walled (0.003" (0.08 mm)) bubble of coffee. The cooled glass bubbles had fragile/brittle walls that when broken formed light gossamer particles which are extremely soluble in hot water.

EXAMPLE IV

A C-37 mm corotating twin screw extruder manufactured by Werner and Pfleiderer Corporation was used to execute these tests.

Beginning at the feed section, one of the screws was fitted with 1045 mm of conveying elements gradually reducing in pitch from 60 mm to 26.7 mm, followed by three sets of alternating 10 mm left handed conveying and neutral elements, followed by a handed kneading block at the extruder discharge. The screw length totaled 1158 mm and the extruder had seven barrels. A matching profile was constructed for the other screw. A sheet die manufactured by Haake Buchler was attached to the extruder discharge. This die had a 4 inch (102 mm) wide opening and the gap was set at 0.005 inch (0.13 mm). The die also contained a pressure transducer which allowed calculation of the die viscosity by standard techniques based on the pressure loss through the die. The extruder operated with barrel 1 (feed) at 70°F (21.1°C); barrel 2/3 at 95°F (35.0°C); 4/5/6/7 (discharge) at 212°F (100°C); sheet die at 220°F (104°C).

A commercially available spray-dried powder at 3% moisture was fed to the C-37 mm operating at a screw speed of 115 rpm. Water was introduced to the powder in barrel 2 at a rate which produced a mixture at 6% moisture. The wetted powder was mixed and heated within the extruder to form a homogeneous melt. The mixture exiting the die was at a temperature of 235°F (113°C) and had a viscosity of 2600 centipoise (2.60 Pas). The mixture was rapidly solidified to a brittle glass.

A second test was run using the same extruder/die set up and conditions. The feed powder in the second test consisted of 50% by weight commercially available spray-dried powder (the same as used previously); 25% by weight commercially available dextrose at 0% moisture and 25% by weight commercially available fructose solids at 0.3% moisture. Water was added to the powder blend in barrel 2 at a rate which produced a mixture at 6% moisture. The melt exiting the die was lighter in color and did not solidify to a brittle glass but stayed soft and tacky. This test was continued by gradually reducing the amount of water added to the coffee/monomeric sugar blend. At the point where no water was added to the extruder, the melt exiting the die continued to be light in color. This mixture had a moisture of 1.6% (no process water added); a temperature of 235°F (113°C) and a viscosity of 2550 centipoise (2.55 Pas) and was soft and tacky.

EXAMPLE V

A spray-dried soluble coffee powder having a bulk density of about 0.26 g/cm$^3$ and a moisture of 2.5%, produced by conventional spray-drying techniques, is fed to the hopper of a K-Tron gravimetric feeder. The K-Tron unit feeds the spray-dried powder into the fourth and fifth barrels of a Werner-Pfleiderer 57 mm, twin-screw extruder, Model No. ZSK 57, at a rate of 143 lb/hr (18.0 gs$^{-1}$). The extruder screws, turning at 107 rpm, convey the melting coffee powder through the extruder. Water is injected into the coffee melt between the sixth and seventh barrels of the extruder at a rate of 5.30 lb/hr (0.67 gs$^{-1}$) which is 3.7% water content based on the powder feed rate.

The coffee melt is extruded through a coat hanger shaped, laminar flow die 18 inches (4.57 mm) in width and having an opening of 0.005 inches (0.13 mm) from Scientific Process and Research, Inc. of Somerset, New Jersey. The die pressure is 351 psig (2.52 MPa). The hot sheet of coffee melt is pulled from the die by a 20" (508 mm) wide Kamflex continuous steel mesh belt conveyor, Model No. 731, with a belt speed of between 50 and 200 ft/min (1.02 ms$^{-1}$). As the sheet is pulled from the die it is stretched to a thickness of 0.001" (0.025 mm) to 0.005" (0.13 mm) from an initial thickness of about 0.01" (0.25 mm) to 0.05" (1.3 mm) resulting from die swelling. The thin continuous sheet of coffee melt cools rapidly to ambient temperatures along the belt and forms large, brittle pieces of coffee glass which are shiny on both sides. From the belt the large pieces are fed to a Model N Urschel grinder where they are ground into smaller flakes. The small flakes are then screened in a 12" (305 mm) SWECO vibrating separator. Particles that fall through the top (8 U.S. mesh (2.38 mm)) screen of the separator and rest upon the bottom (20 U.S. mesh (0.841 mm)) screen are collected as product. All flakes that either rest upon the 8 U.S. mesh screen or fall through the 30 U.S. mesh (0.595 mm) screen are recycled as feed to the extruder.

The screened flakes are dried in a Jeffery vibrating, fluid bed TMV 12" (305 mm) x 20'6" (6.25 m) driving and cooling system using hot air at about 195°F (90.6°C) and 2000 SCFM over the first 10 ft (3.05 m) of the system and ambient cooling air at 2000 SCFM over the last 10 ft (3.05 m) of the system. A coffee residence time in the drying system of about 2 minutes is required to reduce the glass moisture content to about 4.5% moisture. The glass is collected and re-screened using a 12" (305 mm) SWECO vibrating separator. Particles that fall through the top (8 U.S. mesh (2.38 mm)) screen of the separator and rest upon the bottom (30 mesh (0.595 mm) U.S. screen) are collected as product.

Spray-dried soluble coffee powder, similar to that fed to the extruder, is milled in a Fitzmill Model D grinder and then mixed with the screened flakes in a ribbon blender at a ratio of about 7 parts powder to 3 parts flakes. The powder/flake mixture is fed into the 10 foot (3.05 mm) diameter tower agglomerator via a Siletta loss-in-weight feeder at a rate of about 250 lb per/hr (31.5 gs$^{-1}$). Steam enters the agglomerator via one, two, or three nozzles at a total rate of between 125 and 500 lb/hr (15.8 and 63.0 gs$^{-1}$) and a temperature of about 225°F (107°C). An airflow of about 2300 SCFM and 475°F (246°C) is directed down the tower from the plenum of the agglomerator. The air leaves the tower at about 220°F (104°C). The powder/flake feed agglomerates to form a shiny, sparkling powder-flake agglomerate. The agglomerate is conveyed from the tower discharge to a Rotex screener, Model No. 12 SAN ALSS, via a Cardwell vibrating conveyor. Agglomerate that falls through the top (8 U.S. mesh (2.38 mm)) screen and rests upon the bottom (30 U.S. mesh (0.595 mm)) screen of the Rotex are collected as product. Agglomerate that rests on the 8 U.S. mesh (2.38 mm) screen or falls through the 30 U.S. mesh (0.595 mm) screen is collected, ground, and fed as recycle to the agglomerator. The screened product, with a moisture of about 5.5%, is dried in a Jeffrey vibrating, fluid bed TMV 12" (305 mm) x 20'6" (6.25 m) drying and cooling system using hot air at about 195°F (90.6°C) and 2000 SCFM over the first 10 ft (3.05 m) of the system and ambient cooling air at about 2000 SCFM over the last 10 ft (3.05 m) of the system. A coffee residence time in the system of about 115 sec. is used. Agglomerate discharge, at about 4.5% moisture, is collected as product. The product has a unique, sparkling appearance.

EXAMPLE VI

A series of investigations were made using the Werner-Pfleiderer 57 mm twin-screw extruder using an 18-inch (457 mm) laminar die having a 0.005 inch (0.13 mm) die opening. The configuration of the extruder is given in the following table which gives the temperature profile in each of the 10 sections of the extruder and the position of the coffee feed, water or extract addition. In each case the film was drawn down in size by pulling the film away from the die at a rate greater than its exit speed from the die. Film thickness between 1 to 15 mils (0.025 to 0.38 mm) were achieved using the drawdown conveyor speed.

| Run | Extruder Barrel Section Temperature °F (°C) | | | | | | | | | | Feed Rate lbs./hr (gs) | Coffee $H_2O$ Content % | Water Addition Rate lbs./hr (gs) | Product Temp. at die exit °F (°C) | Screw Speed RPM | Die Pressure PSIG (MPa) | Torque % | Product Moisture Content % $H_2O$ |
|---|---|---|---|---|---|---|---|---|---|---|---|---|---|---|---|---|---|---|
| | 1 | 2 | 3 | 4 | 5 | 6 | 7 | 8 | 9 | 10 | | | | | | | | |
| (A) | ●75 (23.9) | 76 (24.4) | 78●● (25.6) | ---- | 210 (98.9) | 218 (103) | 217 (103) | 219 (104) | 229 (109) | 234 (112) | 124.7 (15.7) | 2.0 | 4.89 (0.62) 3.92 | 245 (118) | 117.9 | 310 (2.24) | 65.9 | (5.7) |
| (B) | ●70 (21.1) | 45 (7.2) | 78●● (25.6) | 213 (101) | 200 (93.3) | 218 (103) | 212 (100) | 211 (99.4) | 212 (100) | 228 (109) | 124.7 (15.7) | 2.3 | 9.89 (1.25) 3.92 | 230 (110) | 98.2 | 443.9 (3.16) | 70.4 | 5.9 |
| (C) | | | | | 68● (20.0) | 66 (18.9) | 67●● (19.4) | 187 (86.1) | 189 (87.2) | 199 (92.8) | 84.9 (10.7) | 4.5 | 3.7 (0.47) 4.36 | 195 (90.6) | 62 | 187.3 (1.39) | 30.5 | 7.26 |
| (D) | | | | | 69● (20.6) | 67 (19.4) | 67●● (19.4) | 218 (103) | 214 (101) | 218 (103) | 124.7 (15.7) | 2.5 | 9.89 (1.25) 3.92 | 224 (107) | 97.6 | 510.3 (3.62) | 42.3 | 6.5 |
| (E) | | | | 77● (25.0) | 75● (23.9) | 85●● (29.4) | 123 (50.6) | 187 (86.1) | 193 (89.4) | 200 (93.3) | 84.9 (10.7) | 4.5 | 5.55 (0.70) 6.54 | 197 (91.7) | 61.6 | 468.4 (3.33) | 62.5 | 7.97 |
| (F) | | | | 75● (23.9) | 76 (24.4) | 81●● (27.2) | 124 (51.1) | 189 (87.2) | 194 (90.0) | 201 (93.9) | 84.9 (10.7) | 4.5 | 4.76 (0.60) 5.60 | 199 (92.8) | 62.9 | 439 (3.13) | 64.7 | 7.26 |
| (G) | | | | | 68● (20.0) | 67●● (19.4) | 221 (105) | 211 (99.4) | 222 (106) | 222 (106) | 286.0 (36.0) | 2.3 | 10.6 (1.34) 2.7 | 251 (122) | 197.6 | 536.9 (3.80) | 60.8 | 5.1 |
| (H) | | | | | 68● (20.0) | 66 (18.9) | 66●● (18.9) | 191 (88.3) | 194 (90.0) | 202 (94.4) | 84.7 (10.7) | 4.7 | 3.7 (0.47) 4.4 | 210 (98.9) | 63 | 225 (1.65) | 39.4 | 8.5 |
| (I) | | | | | 68● (20.0) | 66 (18.9) | 66●● (18.9) | 191 (88.3) | 194 (90.0) | 202 (94.4) | 84.7 (10.7) | 4.7 | 3.7 (0.47) 4.37 | 210 (98.9) | 63 | 225 (1.65) | 39.4 | 8.5 |

Run (A)   Film was drawn down to thinner film using a belt conveyor operated at 170 ft./min (0.86 $ms^{-1}$) belt speed.

Run (B)   .0026-.003 inch (0.066-0.076 mm) sheet prepared by stretching at 70 ft/min (0.36 $ms^{-1}$).

Run (C)   Diacetyl was mixed with the water. 84% of <u>diacetyl</u> was retained and, surprisingly, the thin sheet retained more aroma.

Run (D)   75% of synthetic was retained.

Run (E)   1% aromatized coffee oil added with coffee extract.

Run (F)   30% solids extract was added containing aroma. Aroma retention was 65%.

Run (G)   Film was drawn down to thinner film using a belt conveyor operated at 190 ft/min (0.97 $ms^{-1}$) belt speed.

Run (H)   Coffee feed mixed with roasted and ground coffee.

Remarks - location of:
● Feed
●● water, aroma or extract addition addition

## EXAMPLE VII

Two granulated extruded rope products were made from spray-dried powder on Werner Pfleiderer ZSK 57 mm twin-screw extruder. The variants were a freeze-dried look-alike and a roasted and ground look-alike.

12

Freeze Dried Look-alike

Carbon dioxide gas was injected into the extruder barrel to control density, color, and solubility. The key control variables in this operation were moisture, temperature, gas to coffee ratio, and the degree of mixing. The extruder screw profile chosen was one which provided a good deal of mixing while it also maintained at a relatively low temperature profile (See extruder condition). The moisture target of 7.0% was selected in view of the fact that spray-dried coffee contains no hydrolyzate solids. This moisture level, along with the controlled temperature profile, yielded a melt with the right viscosity for dispersing the $CO_2$ gas and for good expansion at the die. The product exits with minimal shrinkage and collapses during cooling. Thus, a very porously-structured rope was formed which could be ground into a freeze-dried look-alike form having a low density and a good degree of solubility.

The die was a 45°, variable-face, strand die with two 3/16" (4.8 mm) diameter holes. As the rope strands exited the die, they expanded to about 5/8" (15.9 mm) diameter and were drawn away at a speed equivalent to the die exit speed on a wire mesh conveying belt. (It is interesting to note that upon leaving the die, the ropes lost about 1% moisture.) While on the belt, they were cooled with a spray of liquid nitrogen. At the end of the belt, the ropes were laid out on a stainless steel table for further cooling (5 to 10 minutes) before being broken up into 2 to 6 inch (51 to 152 mm) pieces and bagged. They were ground in the Urschel Model N grinder (4 passes), sized in the 18" (457 mm) Sweco (-8 +24 US screens), and dried in the Jeffrey fluid-bed afterdryer (one pass).

Extruder Conditions

| Temperature Profile | | |
|---|---|---|
| Barrel # | Jacket Temp., °F (°C) | Barrel Temp., °F (°C) |
| 1, | City Water, 65 (18.3) | 74 (23.3) |
| 2 & 3 | Chiller, 40 (4.4) | 63 (17.2), 92 (33.3) |
| 4, | Heater #1, 195 (90.6) | 222 (106) |
| 5 & 6 | Heater #2, 195 (90.6) | 212 (100) |
| 7 & 8 | Heater #3, 195 (90.6) | 209 (98.3) |
| 9 & 10, | Heater #4, 195 (90.6) | 215 (102), 210 (98.9) |
| Powder Feed Rate | 66 lb/hr (8.32 gs$^{-1}$) | |
| Die Temp. | 200 - 207°F (93.3-97.2°C) | |
| Liquid Injection | 29 gm/min of 20% conc-extract, front of barrel #3 | |
| Gas Injection | 2700 cc/min of $CO_2$ gas, front of barrel #6 | |
| Gas Injection Pressure | 220 PSIG (1.62 MPa) | |
| Screw Speed | 100 RPM | |
| Screw Torque | 70.8% | |
| Die Pressure | 295 PSIG | |

Roasted and Ground Look-alike

Extruder conditions were the same as for the freeze-dried look-alike, except for the gas to coffee ratio. In order to attain a slightly speckled, darker product, the gas rate was controlled to a very low flow rate (25 cc/m). This resulted in a much denser rope than the freeze dried, with far less porosity. It also caused the temperature in the latter extruder barrels to rise slightly (+ 10°F (5.6°C)). Moisture loss upon exiting the die was 0.5%. This is to be expected since the porosity is less and since there is much less $CO_2$ gas escaping which aids in moisture removal.

Due to the smaller size desired for the R&G look-alike, five passes were required through the Urschel grinder as shown below:

| Pass | Roller Setting | Guard Clearance |
|------|------|------|
| 1st | 2 | 3/16" (4.76 mm) |
| 2nd | 1 | 3/16" (4.76 mm) |
| 3rd | 0 | 3/16" (4.76 mm) |
| 4th | 0 | 1/8" (3.18 mm) |
| 5th | 0 | minimum |

The product was sized in the 18" (457 mm) Sweco screener using -14/+20 US screens ( /0.841 mm). Due to the lower porosity of the R&G sample, two passes through the Jeffrey fluid-bed after dryer were required to reduce the moisture to an acceptable level.

Jeffrey Fluid-bed Afterdryer Conditions

| Condition | Freeze Dried | Roasted & Ground |
|------|------|------|
| Drying Air Temp., °F (°C) | 190 (87.8) | 190 (87.8) |
| Drying Air Velocity, ft/min. (ms$^{-1}$) | 55 (0.28) | 55 (0.28) |
| Feed Rate, lb/hr (gs$^{-1}$) | 60 (7.56) | 60 (7.56) |
| Residence Time, Drying, sec. | 135 | 135 |
| Cooling Air Temp., °F (°C) | 65 (18.3) | 65 (18.3) |
| Residence Time, Cooling, sec. | 60 | 60 |
| Moisture, In. % $H_2O$ | 6.16 | 6.50 |
| Moisture, Out, % $H_2O$ | 4.01 | 5.58, 1st pass<br>5.05, 2nd pass |

Product Evaluation and Analysis

Organoleptic and Visual

The finished products were tested to evaluate the effects of the various processing steps on flavor quality. They were described as being similar in character to the spray-dried powder which was used to produce them. The consensus of the panel was that the products met all expectation for flavor, quality and appearance.

14

Product Attributes

|  | Density g/cc | Moisture | Color °L |
|---|---|---|---|
| Freeze Dried Look-alike: | 0.21 | 4.01 | 28.0 |
| Roasted & Ground Look-alike: | 0.41 | 5.05 | 18.0 |

NOTE: spray dried powder used in this example physicals are:

Density: 0.25 g/cc
Moisture: 2.75%

EXAMPLE VIII

A series of investigations were made using the Werner-Pfleiderer ZSK 57 mm twin-screw extruder using an 18-inch (457 mm) laminar die having a 0.005" (0.13 mm) die opening or a two holed die. The configuration of the extruder is given in the following table which gives the temperature profile in each of the 10 sections of the extruder and the position of the coffee feed, gasification, water or extract addition and a general description of the product.

| Run | Extruder Barrel Section Temperature °F (°C) 1 | 2 | 3 | 4 | 5 | 6 | 7 | 8 | 9 | 10 | Feed Rate lbs./hr (gs⁻¹) | Coffee H₂O Content % | Water Addition Rate lbs/hr (gs⁻¹) | Product Temp. at die exit °F (°C) | Screw Speed RPM | Die Pressure PSIG (MPa) | CO₂ Gas Addition cc/min. | Torque % | Product Moisture Content % H₂O |
|---|---|---|---|---|---|---|---|---|---|---|---|---|---|---|---|---|---|---|---|
| (A) | •74 (23.3) | 89 (31.7) | 94•• (34.4) | 208 (97.8) | 198 (92.2) | 214 (101) | 212••• (100) | 209 (98.3) | --- | 207 (97.2) | 138.1 (17.4) | 2.5 | 3.31 2.39 (0.42) | 200 (93.3) | 97.5 | 214.5 (1.58) | 1500 | 40.6 | 4.8 |

The following two runs were made using a die having two holes:

| Run | 1 | 2 | 3 | 4 | 5 | 6 | 7 | 8 | 9 | 10 | Feed Rate | Coffee H₂O | Water Addition | Product Temp. | Screw Speed | Die Pressure | CO₂ Gas | Torque | Product Moisture |
|---|---|---|---|---|---|---|---|---|---|---|---|---|---|---|---|---|---|---|---|
| (B) 3/16 inch holes | •88 (31.1) | 63 (17.2) | 67•• (19.4) | 221 (105) | 215 (102) | 219•• (104) | 215 (102) | --- | 213 (101) | 215 (102) | 59.4 (7.48) | 3.37 | 4.1 6.9 (0.52) 30% extract | 205-210 (96.1-98.9) | 105 | 155 (1.17) | 1500 | 69 | 6.7 |
| (C) 1/8 inch holes | | | | | •66 (18.9) | 68• (20.0) | 198••• (92.2) | 200 (93.3) | 207 (97.2) | 207 (97.2) | 84.9 (10.7) | 4.5 | 3.57 4.2 (0.45) | 210 (98.9) | 61 | 245 (1.79) | small amount of gas | 69 44.7 | 2.3 |
| (D) | 82• (27.8) | 43 (6.1) | 57 (13.9) | 229•• (109) | 208 (97.8) | 214 (101) | 215 (102) | 215 (102) | 216 (102) | 228 (109) | 66 (8.32) | 1.9 | 2.4 55 (0.30) | 229 (109) | 75 | 350 (2.51) | none | 86 | 5.5 |
| (E) | | | | | 68• (20.0) | 66 (18.9) | 67•• (19.4) | 199 (92.8) | 203••• (95.0) | 206 (96.7) | 85 (10.7) | 4.7 | 3.6 4.2 (0.45) | 210 (98.9) | 61 | 236 (1.73) | 2000 | 39 | 5.93 |

Run (A)  Gasified sheet not as elastic, but could be drawn down at 30 ft/min (0.15 ms⁻²).  Color was far lighter.

Run (B)  Long continuous strands of soluble coffee when granulated -8 +24 U.S. mesh having a freeze-dried appearance, density of 0.275 and 28 color.

Run (C)  Long continuous ropes of solid coffee were granulated to -10 +20 U.S. mesh, having a roasted and ground appearance, dark color and 0.5 g/cc density.

Run (D)  1% Ammonium bicarbonate* uniformly mixed with the spray-dried coffee feed to the extruder.  There was recovered a long continuous strand of soluble coffee when granulated -8 +20 U.S. mesh, having a freeze-dried appearance, density on 0.27 and 29 color.

Run (E)  Soluble coffee powder is mixed with 5% colloidal roasted and ground coffee to produce long continuous strands of soluble coffee having a freeze-dried appearance.

Remarks - location of:  •  Feed
                        ••  water addition
                        •••  water addition
                        *  Decomposition of Ammonium bicarbonate produced gas which was mixed into the coffee melt in the extruder and produced an expanded coffee melt.

EXAMPLE IX

Crystal Formation

Brown coffee extract at about 55% solids concentration is fed to the preheater at a rate of about 160 lb/hr (20.2 gs$^{-1}$) by the Waukesha, size 15, feed pump. On the discharge side of the pump, the extract passes through a Tate Andale model ID strainer to remove any sediment before entering the preheater. In the hot water jacketed preheater, Luwa model #TV0030, the extract temperature is raised from ambient to 77°C. The preheater rotor is run at 160 RPM. The heated extract exits the top of the preheater and flows to the evaporator inlet.

The heated extract enters the top of the evaporator, Luwa model #HS0050. The evaporator's rotor speed is maintained at about 380 rpm and is driven hydraulically by a Falk fluid power drive, model #30VCVf-AA-2123-70. A Nash pump, size AT-64, is used to create the 7 inch Hg (3386.39 Pa) vacuum in the evaporator. Saturated steam of about 34 psig (336 kPa absolute) is passed through the evaporator jacket to heat the extract inside to about 93°C. The thickening of the extract causes a rotor torque of about 1,100 inch-lbs (124.3 Nm). The vaporized water is drawn out the top of the evaporator and into the top of the condenser. The fixed shell and tube condenser has a surface area of 67 ft$^2$ (6.22 m$^2$) and is supplied with plant chilled water. A Gould pump, model #3196, draws the condensed evaporator drawoff from the condenser to a collection vessel or to drain.

Beneath the evaporator the concentrated extract, about 91% solids, enters a custom-made 3-gallon (11.4 dm$^3$) spool piece. A level of about 1½ gallons (5.7 dm$^3$) is maintained. The spool piece level is detected via a K-Ray level sensor model #7062B. The concentrated extract is removed from the spool piece by a MAAG Vacorax gear pump, model #70/70, run at a speed of 30 rpm. A Nametra direct readout viscometer, model #667-9-87, located below the discharge of the Vacorax pump, senses the visocity of the coffee fluid which runs between 5 x 10$^4$ to 1 x 10$^6$ cp (50 to 1000 Pas). Full-port type C-1 ball valves from Mogas are used to divert the fluid to the static mixers and formation die. The pressure at the Vacorax pump discharge and the formation die inlet are sensed via Gentran model GF-72/6-XXX-5M, -365 pressure tranducers and Gentran model GF-434 digital indicators.

The viscoelastic coffee fluid is pumped through three sections of static mixers each containing fourteen Sultzer SMX type mixing elements. Coffee aromas are injected into the coffee fluid through custom-made Sultzer injection nozzles. An Eldex metering pump, model #AA-100S, is used to feed the aromas at rates and conditions that vary with the coffee blends used. As the viscoelastic fluid and aromas pass through the static mixers they form a homogeneous product which is then extruded through an HPM series 2500 sheet die. The 12-inch (305 mm) wide die is gapped to a 0.005 inch (0.13 mm) opening. electric heaters provided by HPM are used to maintain the die temperature of 200°F (93.3°C).

The coffee sheet extruded through the die is stretched by a belt conveyor with a stainless steel mesh belt at a rate of between 50-150 ft/min (0.25-0.76 ms$^{-1}$). The conveyor length is about 18 ft (5.5 m). The coffee sheet, having cooled on the belt is then fed to an Urschel grinder, model N. A Sweco vibrating screener, model #LS 18S333, is used to screen the ground coffee flakes to the specified size of -12/+30 U.S. mesh ( /0.595 mm). The screened flakes are then dried in a Jeffrey TMV 2 ft (0.61 m) x 15 ft (4.57 m) long vibrating, fluid-bed dryer to achieve the desired 4.5-4.75% moisture.


EXAMPLE X

Roast-and-Ground Form Formation

Brown coffee extract of about 55% solids concentration is preheated and concentrated as in Example 1. The resulting viscoelastic coffee fluid at about 92% concentration is pumped through the static mixers via the Vacorax gear pump as in Example 1. To achieve the desired roast-and-ground appearance, liquid carbon dioxide is injected directly from a GP-45 carbon dioxide portable tank at 300 psig (2.17 MPa) at a mass flow rate of about 0.1 lb carbon dioxide per pound of coffee solids (about 0.1 g carbon dioxide per gram of coffee solids). The carbon dioxide flow rate is controlled by regulating the back pressure at the injection nozzle.

After mixing, the viscoelastic coffee fluid is extruded through an electrically heated HPM series 100 strand die consisting of between 1 to 8, 1/8 inch (3.18 mm) diameter holes angled downward at 45°. The resulting strands of coffee, now slightly expanded and speckled in appearance due to the flashing carbon dioxide, are conveyed from the die along an 18 ft (5.5 m) long stainless steel mesh belt conveyor and rapidly cooled. The strands from the belt conveyor are then ground, screened, and dried as in Example 1 with the product size being -8/+24 U.S. mesh.

Other novel soluble coffee forms such as freeze-dried and roasted whole bean look-alike are possible by injecting gas or supercritical fluid at various flow rates with a Bran and Luebbe 55 mm plunger piston pump, model #A7365.

Other typical examples are summarized in the following table:

Table I: Pilot Plant Run Summary

| Run # | Feed to Evaporator | | | Evaporator | | Product | |
|---|---|---|---|---|---|---|---|
| | Rate (lb/hr) (gs⁻¹) | Conc'n % | Temp. (°C) | Vacuum (inch Hg) (kPa) | Rotor RPM (% Max.) | Conc'n % | Temp. at evaporator discharge (°C) |
| A | 160 (20.2) | 59 | 82° | 8 (27) | 380 | 92.5 | 93° |
| B | 180 (22.7) | 50 | 78° | 8 (27) | 240 | 90.5 | 93° |
| C | 100 (12.6) | 48.5 | 62° | 8 (27) | 350 | | 93° |
| D | 135 (17.0) | 57.2 | 77° | 8 (27) | 230 | 91.9 | 91° |

Comments:

A. Liquid carbon dioxide was injected into the static mixer to control product density or color. Product was collected as ropes then granulated and sized and after dried. Density: 0.342 g/cc   Color: 20°L   Size: -8, +20 US mesh

B. Product stretched to form a thin film. Thin, shiny crystals were dried to stable moistures. Density: .599 g/cc   Color: 18°L   Size: -8, +20 US mesh

C. Product shaped as ropes then granulated and sized. No drying required. Density: 0.462 g/cc   Color: 18°L   Size: -8, +20 US mesh

D. Product stretched to form thin film. Thin, shiny crystals were dried to stable moistures. Density: 0.462 g/cc   Color: 18°L   Size: -8, +20 US mesh

18

EP 0 354 810 B1

**Claims**

1. A method of forming a gasified coffee glass comprising:

   (a) forming a mixture of from 88% to 97% total coffee derived solids and 3% to 12% water;
   (b) adjusting the mixture temperature to 60°C to 130°C to form a melt;
   (c) injecting gas into the melt under pressure in a confined area to form a gasified melt;
   (d) forcing the melt under pressure through an orifice to shape the gasified melt;
   (e) rapidly cooling the gasified shaped melt leaving the orifice to form a gasified homogeneous coffee glass; and
   (f) recovering the homogeneous gasified glass.

2. A method as claimed in claim 1, wherein the mixture contains from 91% to below 96% coffee solids and from above 4% to 9% water in step (a).

3. A method as claimed in claim 1 or 2, wherein the mixture is heated to 70°C to 110°C.

4. A method as claimed in claim 3, wherein the mixture is heated to 80°C to 100°C.

5. A method as claimed in any of claims 1 to 4, wherein the gas is carbon dioxide, nitrogen, air or mixtures thereof.

6. A method as claimed in any of claims 1 to 5, wherein the gasified melt is cooled in step (e) by liquid nitrogen.

7. A method as claimed in any of claims 1 to 6, wherein the gasified melt is cooled within 180 s.

8. A method as claimed in claim 7, wherein the gasified melt is cooled within 120 s.

9. A method as claimed in claim 8, wherein the gasified melt is cooled within 60 s.

10. A method as claimed in any of claims 1 to 9, wherein the gasified shaped melt is cooled with retention of at least 50% of volatiles.

11. A method as claimed in claim 10, wherein the gasified shaped melt is cooled with retention of at least 70% of volatiles.

12. A method as claimed in claim 11, wherein the gasified shaped melt is cooled with retention of at least 80% of volatiles.

13. A method as claimed in any of claims 1 to 12, wherein the orifice in step (d) is provided by a sheeting die having an opening of 2 to 20 mils (51 to 510 $\mu$m).

14. A method as claimed in any of claims 1 to 13, wherein the melt is forced in step (d) through the orifice at a pressure of up to 2500 psi (17.4 MPa).

15. A method as claimed in any of claims 1 to 14, wherein the mixture of step (a) is obtained by mixing dried coffee solids with water.

16. A method as claimed in any of claims 1 to 14, wherein the mixture of step (a) is obtained by concentrating an aqueous coffee extract.

17. A method as claimed in claim 16, wherein the mixture is obtained by concentrating by evaporation a preconcentrated 100% coffee extract having a solids content of 45% or greater.

18. A method as claimed in claim 16, wherein the mixture is concentrated by forming a thin film of concentrated extract on a heated evaporator wall and propelling the extract down the wall in a thin film, while maintaining the extract at a temperature of 60°C to 130°C.

19

19. A method as claimed in claim 18, wherein the extract is propelled down the wall by rotating blades having a wall clearance of about 1/8 inch (about 3.2 mm).

20. A method as claimed in claim 19, wherein the blades rotate at 350 to 550 rpm.

21. A method as claimed in any of claims 1 to 20, including the step of drying the gasified glass to a stable moisture content.

22. A method as claimed in claim 21, wherein the gasified melt is dried to a moisture content of below 6% water.

23. A method as claimed in claim 22 wherein the moisture content is 2.5% to 5% water.

24. A method as claimed in any of claims 16 to 20, further including adding aroma and/or flavour derived from the extract to the melt prior to shaping the melt.

25. A method as claimed in any of claims 1 to 22, which further including adding flavor and/or aroma to the melt prior to shaping the melt.

26. A method as claimed in claim 25, wherein the aroma and/or flavor added to the melt is coffee oil.

27. A method as claimed in claim 25, wherein the aroma and/or flavor added to the melt is colloidal coffee.

28. A method as claimed in any of claims 1 to 27, further comprising stretching the gasified melt leaving the orifice while it is being rapidly cooled.

29. A method as claimed in claim 28, wherein the melt leaving the orifice is stretched by being pulled at a speed greater than that at which the shaped mixture exits the orifice.

30. A method as claimed in claim 29, wherein the mixture is stretched to form a thin transparent film of coffee glass of from 1 to 15 mils (25.4 to 381 $\mu$m) thickness.

31. A method as claimed in any of claims 28 to 30, including grinding the stretched gasified melt to form a crystalline product.

32. A method as claimed in any of claims 1 to 27, including grinding the gasified glass recovered in step (f), to obtain a final freeze-dried or roasted and ground coffee appearing product

33. A method as claimed in claim 31 or 32, wherein the gasified glass is ground cryogenically.

34. A method as claimed in any of claims 31 to 33, including blending the ground coffee glass with dry coffee solids having a moisture content of less than 4.5% by weight in a weight ratio effective to prepare a coffee product having an average moisture of no more than 5% by weight.

35. A method as claimed in any of claims 1 to 34, wherein formation of the melt in step (b) is effected within an extruder.

36. A method as claimed in any of claims 1 to 35, wherein the mixture formed in step (a) has a glass transition temperature of 30°C to 80°C.

37. A method as claimed in claim 36, wherein the mixture has a glass transition temperature of 40° to 65°C.

38. Transparent, dry, flakes of coffee glass obtainable by a method according to any of claims 1 to 37, the flakes being shiny on both sides and dark brown in colour, having a thickness of 1 to 15 mils (25.4 to 381 $\mu$m), a screen size of -8 to +30 U.S. standard mesh (-2.38 mm to +595 $\mu$m), a bulk density of 0.35 to 0.55 g cm$^{-3}$ and a color of 15 to 22°L and optionally a moisture content below 6% water.

**39.** A soluble coffee product containing 60 to 95% dry coffee having a bulk density of 0.15 to 0.35 g.cm$^{-3}$ and 5 to 40% of a glass as claimed in claim 38.

**Patentansprüche**

1. Verfahren zur Herstellung von begastem Kaffeeglas, umfassend:
   (a) Herstellen einer Mischung von 88 % bis 97 % von vollständig aus Kaffee stammenden Feststoffen und 3 % bis 12 % Wasser;
   (b) Einstellung der Mischung auf eine Temperatur von 60 bis 130°C unter Bildung einer Schmelze;
   (c) Einleiten von Gas in die Schmelze unter Druck in einem abgegrenzten Bereich unter Bildung einer begasten Schmelze;
   (d) Durchleiten der Schmelze unter Druck durch eine Öffnung unter Formung der begasten Schmelze;
   (e) rasches Abkühlen der begasten geformten Schmelze, die die Öffnung verläßt, unter Bildung von begastem homogenem Kaffeeglas; und
   (f) Gewinnen des homogenen begasten Glases.

2. Verfahren nach Anspruch 1, worin die Mischung 91 % bis unter 96 % Kaffee-Feststoffe und 4 % bis 9 % Wasser in Schritt (a) enthält.

3. Verfahren nach Anspruch 1 oder 2, worin die Mischung auf 70°C bis 110°C erhitzt wird.

4. Verfahren nach Anspruch 3, worin die Mischung auf 80°C bis 100°C erhitzt wird.

5. Verfahren nach einem der Ansprüche 1 bis 4, worin das Gas Kohlendioxid, Stickstoff, Luft oder Mischungen davon ist.

6. Verfahren nach einem der Ansprüche 1 bis 5, worin die begaste Schmelze im Schritt (e) durch flüssigen Stickstoff abgekühlt wird.

7. Verfahren nach einem der Ansprüche 1 bis 6, worin die begaste Schmelze innerhalb 180 Sekunden abgekühlt wird.

8. Verfahren nach Anspruch 7, worin die begaste Schmelze innerhalb 120 Sekunden abgekühlt wird.

9. Verfahren nach Anspruch 8, worin die begaste Schmelze innerhalb 60 Sekunden abgekühlt wird.

10. Verfahren nach einem der Ansprüche 1 bis 9, worin die begaste geformte Schmelze mit einem Restgehalt von mindestens 50 % an flüchtigen Bestandteilen abgekühlt wird.

11. Verfahren nach Anspruch 10, worin die begaste geformte Schmelze mit einem Restgehalt von mindestens 70 % an flüchtigen Bestandteilen abgekühlt wird.

12. Verfahren nach Anspruch 11, worin die begaste geformte Schmelze mit einem Restgehalt von mindestens 80 % an flüchtigen Bestandteilen abgekühlt wird.

13. Verfahren nach einem der Ansprüche 1 bis 12, worin die Öffnung in Schritt (d) durch eine Foliendüse mit einer Öffnung von 2 bis 20 Mils (51 bis 510 µm) bereitgestellt wird.

14. Verfahren nach einem der Ansprüche 1 bis 13, worin die Schmelze in Schritt (d) durch die Öffnung bei einem Druck von bis zu 2500 psi (17,4 MPa) gepreßt wird.

15. Verfahren nach einem der Ansprüche 1 bis 14, worin die Mischung in Schritt (a) durch Mischen von getrockneten Kaffee-Feststoffen mit Wasser erhalten wird.

16. Verfahren nach einem der Ansprüche 1 bis 14, worin die Mischung in Schritt (a) durch Konzentrieren eines wäßrigen Kaffee-Extraktes erhalten wird.

**17.** Verfahren nach Anspruch 16, worin die Mischung durch Konzentrieren unter Verdampfen eines vorkonzentrierten 100%igen Kaffee-Extraktes mit einem Feststoffgehalt von 45 % oder größer erhalten wird.

**18.** Verfahren nach Anspruch 16, worin die Mischung konzentriert wird durch Bilden eines dünnen Films eines konzentriertes Extraktes auf einer erhitzten Verdampferwand, und man den Extrakt in einem dünnen Film die Wand herabtreibt, während der Extrakt bei einer Temperatur von 60°C bis 130°C gehalten wird.

**19.** Verfahren nach Anspruch 18, worin man den Extrakt mit einem Propeller mit einem Wandabstand von ca. 1/8 inch (ca. 3,2 mm) die Wand herabtreibt.

**20.** Verfahren nach Anspruch 19, worin die Propellerblätter bei 350 bis 550 Upm rotieren.

**21.** Verfahren nach einem der Ansprüche 1 bis 20, einschließlich dem Schritt des Trocknens des begasten Glases bis zu einem stabilen Feuchtigkeitsgehalt.

**22.** Verfahren nach Anspruch 21, worin die begaste Schmelze bis zu einem Feuchtigkeitsgehalt von unter 6 % Wasser getrocknet wird.

**23.** Verfahren nach Anspruch 22, worin der Feuchtigkeitsgehalt 2,5 % bis 5 % Wasser ist.

**24.** Verfahren nach einem der Ansprüche 16 bis 20, ferner umfassend die Zugabe von Aroma- und/oder Geschmacksstoffen, die aus dem Extrakt gewonnen wurden, zur Schmelze vor der Formung der Schmelze.

**25.** Verfahren nach einem der Ansprüche 1 bis 22, ferner umfassend die Zugabe von Geschmack- und/oder Aromastoffen zur Schmelze vor Formung der Schmelze.

**26.** Verfahren nach Anspruch 25, worin der der Schmelze zugegebene Aroma- und/oder Geschmacksstoff Kaffeeöl ist.

**27.** Verfahren nach Anspruch 25, worin der der Schmelze zugegebene Aroma- und/oder Geschmacksstoff kolloidaler Kaffee ist.

**28.** Verfahren nach einem der Ansprüche 1 bis 27, ferner umfassend das Recken der begasten Schmelze, welche die Öffnung verläßt, während sie rasch abgekühlt wird.

**29.** Verfahren nach Anspruch 28, worin die die Öffnung verlassende Schmelze durch Ziehen mit einer größeren Geschwindigkeit als derjenigen, bei der die geformte Mischung die Öffnung verläßt, gereckt wird.

**30.** Verfahren nach Anspruch 29, worin die Mischung in Form eines dünnen transparenten Films aus Kaffeeglas von 1 bis 15 Mil (25,4 bis 381 $\mu$m) Dicke gereckt wird.

**31.** Verfahren nach einem der Ansprüche 28 bis 30, umfassend das Mahlen der gereckten begasten Schmelze unter Bildung eines kristallinen Produktes.

**32.** Verfahren nach einem der Ansprüche 1 bis 27, umfassend das Mahlen des begasten Glases, das aus Schritt (f) gewonnen wurde, unter Erhalt eines Produktes, das wie gefriergetrockneter oder gerösteter und gemahlener Kaffee aussieht.

**33.** Verfahren nach Anspruch 31 oder 32, worin das begaste Glas kryogen gemahlen wird.

**34.** Verfahren nach einem der Ansprüche 31 bis 33, umfassend das Vermischen des gemahlenen Kaffeeglases mit trockenen Kaffee-Feststoffen mit einem Feuchtigkeitsgehalt von weniger als 4,5 Gew.% in einem Gewichtsverhältnis, das geeignet ist, ein Kaffeeprodukt mit einer mittleren Feuchtigkeit von nicht mehr als 5 Gew.% zu erzeugen.

**35.** Verfahren nach einem der Ansprüche 1 bis 34, worin die Bildung der Schmelze in Schritt (b) mit einem Extruder erfolgt.

**36.** Verfahren nach einem der Ansprüche 1 bis 35, worin die in Schritt (a) gebildete Mischung eine Glasübergangstemperatur von 30°C bis 80°C hat.

**37.** Verfahren nach Anspruch 36, worin die Mischung eine Glasübergangstemperatur von 40°C bis 65°C hat.

**38.** Transparente trockene Flocken von Kaffeeglas, erhältlich durch ein Verfahren nach einem der Ansprüche 1 bis 37, wobei die Flocken auf beiden Seiten durchscheinend sind und eine dunkelbraune Farbe haben, mit einer Dicke von 1 bis 15 Mils (25,4 bis 381 $\mu$m) und eine Siebgröße von -8 bis +30 U.S.-Standard-Mesh (-2,38 mm bis +595 $\mu$m), eine Schüttdichte von 0,35 bis 0,55 g/cm$^3$ und eine Farbe von 15 bis 22°L und gegebenenfalls einen Feuchtigkeitsgehalt von unter 6 % Wasser.

**39.** Lösliches Kaffeeprodukt, enthaltend 60 bis 95 % Trockenkaffee mit einer Schüttdichte von 0,15 bis 0,35 g/cm$^3$ und 5 bis 40 % eines Glases gemäß Anspruch 38.

**Revendications**

**1.** Procédé de formation d'un verre de café gazéifié, comprenant :
(a) la formation d'un mélange de 88 % à 97 % de produits solides totaux dérivés de café, et 3 % à 12 % d'eau ;
(b) l'ajustement de la température du mélange à 60 °C à 130 °C pour former une masse fondue ;
(c) l'injection de gaz dans la masse fondue, sous pression dans une aire confinée, pour former une masse fondue gazéifiée ;
(d) le forcement de la masse fondue à passer sous pression par un orifice pour façonner la masse fondue gazéifiée ;
(e) le refroidissement rapide de la masse fondue gazéifiée façonnée quittant l'orifice, pour former un verre de café gazéifié homogène ; et
(f) la récupération du verre gazéifié homogène.

**2.** Procédé selon la revendication 1, dans lequel le mélange contient de 91 % jusqu'à moins de 96 % de produits solides de café, et de plus de 4 % à 9 % d'eau dans l'étape (a).

**3.** Procédé selon la revendication 1 ou 2, dans lequel le mélange est chauffé à 70 °C à 110 °C.

**4.** Procédé selon la revendication 3, dans lequel le mélange est chauffé à 80 °C à 100 °C.

**5.** Procédé selon l'une quelconque des revendications 1 à 4, dans lequel le gaz est le dioxyde de carbone, l'azote, l'air ou des mélanges de ceux-ci.

**6.** Procédé selon l'une quelconque des revendications 1 à 5, dans lequel la masse fondue gazéifiée est refroidie dans l'étape (e) par de l'azote liquide.

**7.** Procédé selon l'une quelconque des revendications 1 à 6, dans lequel la masse fondue gazéifiée est refroidie en l'espace de 180 s.

**8.** Procédé selon la revendication 7, dans lequel la masse fondue gazéifiée est refroidie en l'espace de 120 s.

**9.** Procédé selon la revendication 8, dans lequel la masse fondue gazéifiée est refroidie en l'espace de 60 s.

**10.** Procédé selon l'une quelconque des revendications 1 à 9, dans lequel la masse fondue gazéifiée façonnée est refroidie avec rétention d'au moins 50 % des matières volatiles.

**11.** Procédé selon la revendication 10, dans lequel la masse fondue gazéifiée façonnée est refroidie avec rétention d'au moins 70 % des matières volatiles.

**12.** Procédé selon la revendication 11, dans lequel la masse fondue gazéifiée façonnée est refroidie avec rétention d'au moins 80 % des matières volatiles.

**13.** Procédé selon l'une quelconque des revendications 1 à 12, dans lequel l'orifice dans l'étape (d) est fourni par une filière pour feuilles ayant une ouverture de 2 à 20 mils (51 à 510 $\mu$m).

**14.** Procédé selon l'une quelconque des revendications 1 à 13, dans lequel on force la masse fondue, dans l'étape (d), à passer par l'orifice à une pression allant jusqu'à 2500 psi (17,4 MPa).

**15.** Procédé selon l'une quelconque des revendications 1 à 14, dans lequel le mélange de l'étape (a) est obtenu en mélangeant des produits solides de café séchés avec de l'eau.

**16.** Procédé selon l'une quelconque des revendications 1 à 14, dans lequel le mélange de l'étape (a) est obtenu en concentrant un extrait de café aqueux.

**17.** Procédé selon la revendication 16, dans lequel le mélange est obtenu en concentrant par évaporation un extrait de 100 % de café préconcentré ayant une teneur en produits solides de 45 % ou plus.

**18.** Procédé selon la revendication 16, dans lequel le mélange est concentré en formant une pellicule mince d'extrait concentré sur une paroi d'évaporateur chauffé et en propulsant l'extrait vers le bas de la paroi en une pellicule mince, tout en maintenant l'extrait à une température de 60 °C à 130 °C.

**19.** Procédé selon la revendication 18, dans lequel l'extrait est propulsé vers le bas de la paroi par des lames rotatives ayant un écart avec la paroi d'environ 1/8 de pouce (environ 3,2 mm).

**20.** Procédé selon la revendication 19, dans lequel les lames tournent à 350 à 550 tr/min.

**21.** Procédé selon l'une quelconque des revendications 1 à 20, incluant l'étape de séchage du verre gazéifié à une teneur en humidité stable.

**22.** Procédé selon la revendication 21, dans lequel la masse fondue gazéifiée est séchée à une teneur en humidité inférieure à 6 % d'eau.

**23.** Procédé selon la revendication 22, dans lequel la teneur en humidité est de 2,5 à 5 % d'eau.

**24.** Procédé selon l'une quelconque des revendications 16 à 20, incluant en outre l'addition d'arôme et/ou de goût obtenu de l'extrait à la masse fondue avant le façonnage de la masse fondue.

**25.** Procédé selon l'une quelconque des revendications 1 à 22, qui inclut en outre l'addition de goût et/ou d'arôme à la masse fondue avant le façonnage de la masse fondue.

**26.** Procédé selon la revendication 25, dans lequel l'arôme et/ou le goût ajouté à la masse fondue est de l'huile de café.

**27.** Procédé selon la revendication 25, dans lequel l'arôme et/ou le goût ajouté à la masse fondue est du café colloïdal.

**28.** Procédé selon l'une quelconque des revendications 1 à 27, comprenant en outre l'étirement de la masse fondue gazéifiée quittant l'orifice pendant qu'elle est rapidement refroidie.

**29.** Procédé selon la revendication 28, dans lequel la masse fondue quittant l'orifice est étirée en étant tirée à une vitesse supérieure à celle à laquelle le mélange façonné sort de l'orifice.

**30.** Procédé selon la revendication 29, dans lequel le mélange est étiré pour former une pellicule transparente de verre de café mince, de 1 à 15 mils (25,4 à 381 $\mu$m) d'épaisseur.

**31.** Procédé selon l'une quelconque des revendications 28 à 30, incluant le broyage de la masse fondue gazéifiée étirée pour former un produit cristallin.

**32.** Procédé selon l'une quelconque des revendications 1 à 27, incluant le broyage du verre gazéifié récupéré dans l'étape (f), pour obtenir un produit final ayant l'aspect du café lyophilisé ou torréfié et moulu.

**33.** Procédé selon la revendication 31 ou 32, dans lequel le verre gazéifié est broyé de façon cryogénique.

**34.** Procédé selon l'une quelconque des revendications 31 à 33, incluant le mélange du verre de café broyé avec des produits solides de café secs ayant une teneur en humidité inférieure à 4,5 % en poids, dans un rapport pondéral efficace pour préparer un produit de café ayant une humidité moyenne non supérieure à 5 % en poids.

**35.** Procédé selon l'une quelconque des revendications 1 à 34, dans lequel la formation de la masse fondue dans l'étape (b) est effectuée dans une extrudeuse.

**36.** Procédé selon l'une quelconque des revendications 1 à 35, dans lequel le mélange formé dans l'étape (a) a une température de transition vitreuse de 30 °C à 80 °C.

**37.** Procédé selon la revendication 36, dans lequel le mélange a une température de transition vitreuse de 40 à 65 °C.

**38.** Flocons transparents secs de verre de café, pouvant être obtenus par un procédé selon l'une quelconque des revendications 1 à 37, les flocons étant brillants sur les deux côtés et de couleur marron foncé, ayant une épaisseur de 1 à 15 mils (25,4 à 381 $\mu$m), une grosseur passant au tamis -8 à +30 *mesh* de la norme des États-Unis (-2,38 mm à +595 $\mu$m), une densité en vrac de 0,35 à 0,55 g/cm$^3$ et une couleur de 15 à 22 °L et, facultativement, une teneur en humidité inférieure à 6 % d'eau.

**39.** Produit de café soluble contenant 60 à 95 % de café sec ayant une densité en vrac de 0,15 à 0,35 g/cm$^3$ et 5 à 40 % d'un verre selon la revendication 38.